# EUROPEAN PATENT APPLICATION

(11) **EP 4 571 227 A1**
(43) Date of publication of application: **18.06.2025**
(21) Application number: 24178695.3
(22) Date of filing: 29.05.2024
(51) Int. Cl.: F27B 3/18, C03B 5/235, F27B 3/20, F27B 3/22, F27B 3/26, F27D 17/00, F27D 99/00

(54) **OXYCOMBUSTION KILN FOR FRITS AND ENAMELS**

(30) Priority: 15.12.2023 ES 202332234 U
(71) Applicant: Ingeneo Equipos Industriales, S.L., 12001 Castellón de la PLana Castellón (ES)
(72) Inventor: NEBOT FORÉS, Ramón, 12001 Castellón de la Plana (ES); JIMÉNEZ ROMERO, Luis, 12001 Castellón de la Plana (ES); AGOST TORRALBA, Vicente, 12001 Castellón de la Plana (ES)
(74) Representative: Polo Montañes, Carlos

(57) **Abstract**

The kiln has a new gas and oxygen preheating system that increases the energy efficiency thereof. It is based on the utilisation of the latent heat of the exhaust fumes of the kiln to heat the fuel and the oxidiser, and thereby increase the adiabatic flame temperature, improving the energy transfer to the molten frit bath through the phenomenon of radiation. To that end, between the refractory brick outlet (1.5) and the metal outlet stack (1.6), there is established a fume heat recovery unit (2.2), in which there is defined an outlet circuit for combustion fumes and a recirculation and heating circuit for air forced by a heat-carrying air blower fan (2.1), which is connected in series with an oxygen exchanger (2.3) and a gas exchanger (2.4).

## Description

### FIELD OF THE ART

The present invention is comprised in the field of ceramic frits, and within this field more specifically, in the field of melting kilns with oxycombustion technology which currently use oxygen to react with a gaseous fuel such as natural gas and, more recently, hydrogen.

The present invention relates to a kiln with a new gas and oxygen preheating system that increases the energy efficiency thereof. It is based on the utilisation of the latent heat of the exhaust fumes of the kiln to heat the fuel and the oxidiser, and thereby increase the adiabatic flame temperature from about 3100ºC to about 3250ºC, approximately, improving the energy transfer to the molten frit bath through the phenomenon of radiation.

The kiln of the invention includes a heat recovery system which is installed in the stack of the oxycombustion kiln to cause the necessary melting reactions in the process.

The object of the invention is to reduce the consumption of fuel and oxidiser, also reducing carbon emissions taking place during the combustion reactions of the hydrocarbons used up until now. To that end, an air stream is preheated by means of a double jacket radiation counter-current type heat exchanger installed at the outlet of the kiln to utilise the residual heat of the fumes. This air stream preheated up to about 850ºC is then used to heat the oxygen up to about 800ºC and the natural gas or hydrogen up to about 500ºC by means of at least one shell and tube counter-current exchanger.

Once the gas and oxygen have been preheated, they are introduced into the burner for the oxidation reaction to occur inside the kiln such that, by having this additional energy, the energy input needed by the fuel is lower, and taking into account that the transfer of the heat to the bath is optimised through the phenomenon of radiation, consumption is reduced by up to approximately 22%.

### BACKGROUND OF THE INVENTION

Taking into account the current situation in which the reduction of the use of greenhouse fuels is being pursued, energy optimisation of kilns that use natural gas as a fuel, and even hydrogen, is of vital importance as the latter does not always come from completely renewable sources. In addition, it leads to an improvement in production costs, less dependence on fuels and, therefore, an improvement in the competitiveness of the companies that adopt this technology.

Kilns with oxycombustion technology for melting ceramic frits and enamels are already known today, as is the heat recovery technology of air-gas kilns for preheating the air used as an oxidiser up to about 850ºC.

The preheating of the gaseous fuel and of the oxidiser in oxycombustion kilns for producing glass to optimise gas and oxygen consumption is also known, though to a lesser degree.

The novelty of this invention is the adaptation of the technology for preheating gaseous fuels, whether natural gas (or similar), hydrogen, or any mixture thereof and their corresponding oxygen as an oxidiser, in kilns for frits and enamels, taking into account their challenges and peculiarities. For said adaptation, it has been necessary to develop a double jacket heat recovery unit capable of working with dirty and adherent fumes, a particularity of ceramic frit kilns. It has also been necessary to develop shell and tube recovery units with working temperatures close to 850ºC and with materials resistant to extreme oxidation by oxygen at high temperatures, in addition to an oxycombustion burner capable of withstanding extreme radiation inside the kiln, as it reaches temperatures higher than those of glass kilns and, of course, the extreme oxidation experienced by elements of the burner, such as the body itself, which is heat-insulated, the nozzle manufactured in refractory steel and the duct manufactured with refractory concrete.

### DESCRIPTION OF THE INVENTION

The oxycombustion kiln for frits and enamels proposed by the invention satisfactorily solves the problems set forth above by means of incorporating a double jacket radiation counter-current type heat recovery unit in charge, in a first step, of pre-heating an air stream up to about 850ºC, using the residual energy or heat of the fumes exiting the kiln for frits and enamels. This heat recovery unit is installed at the fume outlet of the kiln and has an unobstructed passage for the primary fluid, since the phenomenon of radiation does not require a narrow passage to improve convection and, therefore, is ideal for kilns for frits and enamels.

Optionally, a controlled dilution of air by means of a servomotor or the like can be installed to protect the heat recovery unit from temperatures higher than 1250ºC.

Once the secondary fluid or air has been pre-heated up to about 850ºC, it is led to the first heat exchanger, which will mainly be the oxygen heat exchanger, since, for safety reasons, it is possible to work at higher temperatures than in the case of natural gas or hydrogen. This mixed radiation and convection type exchanger is designed as a shell and tube counter-current type exchanger using, as the primary fluid, the air in the "tube" area, and as the secondary fluid, the oxygen in the "shell" area, although other arrangements may be valid to obtain the desired temperature of the oxygen.

In this second step, the system goes from having a pre-heated air stream of up to about 850ºC to having an air stream at about 550ºC and an oxygen stream at about 800ºC, this latter stream, i.e., the oxygen stream, is now ready to be introduced into the burner to subsequently oxidise the fuel, thus causing the combustion reaction.

According to another feature of the invention, the excess hot air will be used mainly for pre-heating the fuel, using a heat exchanger similar to the one used for preheating the oxygen. This second exchanger is mainly a convection exchanger and is designed as a shell and tube counter-current type exchanger using, as the primary fluid, the air in the "tube" area, and as the secondary fluid, the fuel in the "shell" area, although other arrangements may be valid to obtain the desired temperature of the fuel.

After this third step, the system goes from having an air stream pre-heated up to about 550ºC to having an air stream at about 250ºC and a gaseous fuel stream at about 500ºC, this latter stream, i.e., the fuel stream, is now ready to be introduced into the burner to subsequently be oxidised with the oxidiser and cause the combustion reaction.

For this last step, which basically corresponds to the combustion reaction, an oxycombustion burner specially prepared to work with the oxygen and the fuel already pre-heated up to the temperatures of 800ºC and 500°C, respectively, is envisaged.

To that end, the burner is basically configured with two desirably concentric conduits having a variable section, in which the combustible gas circulates through the central tube and the oxygen circulates through the outer tube. These conduits are manufactured in a material resistant to high temperatures, with a low coefficient of expansion and, above all, resistant to oxidation. Furthermore, the burner has an outer heat-insulation to reduce insulation losses, which is a characteristic that is only found in this technology, since in typical oxycombustion burners insulation of the conduits is not required because the gas and oxygen are at room temperature, with the nozzle manufactured in refractory steel and the duct manufactured with refractory concrete.

These concentric conduits transport both reagents to the refractory material duct where they meet and the combustion reaction takes place. The main peculiarity of this new burner with respect to current burners is that, due to the increase in temperatures of the reagents, an increase in the reaction kinetics takes place and, therefore, the distance between the burner and the maximum temperature point decreases, with this being an unwanted effect, since the maximum temperature point must be as close as possible to the material inlet, where the greatest possible energy is required to facilitate the phase change. To solve this problem, the diameters, angles, and arrangement of the nozzle are optimised so that the hottest point of the flame occurs as close as possible to the raw material inlet, or rather, as far away as possible from the burner.

Last but not least, the kiln is complemented with a heat-carrying air fan. This equipment is responsible for suctioning outer air through a grating close to the kiln to then blow it and cause it to pass through the fume recovery unit, subsequently through the oxygen exchanger, and finally through the fuel exchanger with enough energy to maintain a minimum working flow rate and both a dynamic and static pressure that is high enough to be able to withstand the pressure drops in recovery units and exchangers, which is relatively high, so as to be able to transfer heat with the smaller surface. Once this air exits the last exchanger, it still has some residual heat as it is at a temperature of about 250ºC, which is why, lastly, a system of synchronised or electrically interlocked motorised valves used to regulate the amount of heat recirculated into the system, has been designed.

This level of recirculated heat is defined at the extremes as:
- 0%, equivalent to zero recirculation, i.e., the air is completely refreshed, therefore, the heat-carrying air is suctioned by the fan at ambient temperature, and once it exits the last exchanger at about 250ºC, it is expelled out by means of a conduit, which is the least efficient but most conservative and safe mode.
- 100%, equivalent to a virtually complete recirculation of the heat-carrying air, therefore, said air is suctioned by the fan at a temperature of about 250ºC and blown into the exchangers with this additional energy, which translates into a higher temperature of the reagents and a higher efficiency of the combustion reaction.

As can be seen, this novel system of valves allows the entire oxygen fuel preheating system to be regulated, being able to select the intermediate recirculation percentages as desired by the user based on their energy saving policies with respect to maintenance costs.

Otherwise, the rest of the typical elements making up a current kiln design of an oxycombustion kiln for frits and enamels remain unchanged, thus defining a new system capable of utilising the heat from the fumes originating from oxycombustion kilns for enamel frits to obtain energy savings of 22%.

### BRIEF DESCRIPTION OF THE DRAWINGS

To complement the description that will be made below and for the purpose of helping to better understand the features of the invention according to a preferred practical embodiment thereof, a drawing is attached as an integral part of said description in which the following is depicted in an illustrative and non-limiting manner:

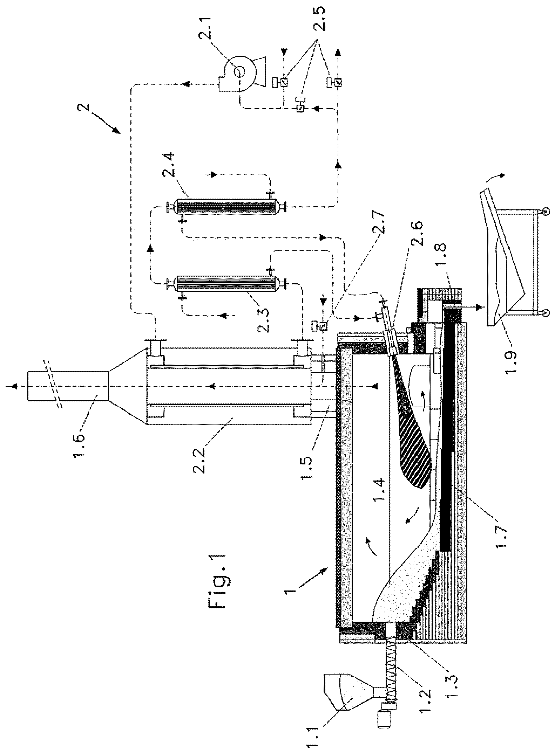

Figure 1 shows a profile section view of an oxycombustion kiln for enamel frits carried out according to the object of the present invention.

### PREFERRED EMBODIMENT OF THE INVENTION

In Figure 1, the following reference numbers, separated into two groups to better understand what the invention represents with respect to what is already in existence, have been used.

Group 1: Corresponding to conventional elements found in an oxycombustion kiln and are part of the current state of the art.
- Receiving hopper (1.1)
- Feed auger (1.2)
- Loading hole (1.3)
- Combustion chamber (1.4)
- Refractory brick outlet stack (1.5)
- Metal outlet stack (1.6)
- Floor (1.7)
- Outlet spout (1.8)
- Vibrating tray (1.9)

Group 2: Corresponding to the elements improving the performance of the kiln of the present invention.
- Heat-carrying air fan (2.1)
- Fume heat recovery unit (2.2)
- Oxygen heat exchanger (2.3)
- Gas heat exchanger (2.4)
- Recirculation valves (2.5)
- Oxycombustion burner (2.6)
- Dilution air injector (2.7)

In view of the mentioned figure, it can be seen how the kiln of the invention is based on a conventional structuring of a kiln for melting ceramic frits, which has a receiving hopper (1.1) for the material to be melted, feeding the kiln through a feed auger (1.2), specifically through a loading hole (1.3), which kiln, as it is a conventional kiln, includes a combustion chamber (1.4) with an opening which communicates with a refractory brick outlet stack (1.5) as a gas evacuation channel, ending with a metal outlet stack (1.6), while a floor (1.7) is established in the lower portion, which is typically made of an electrofused material, the body of the kiln having a lower outlet spout (1.8) for the exit of the molten material towards a vibrating tray (1.9).

According to the essence of the invention, there is intended to be established between the refractory brick outlet (1.5) and the metal outlet stack (1.6) a double jacket type fume heat recovery unit (2.2), through the inner jacket of which combustion gases circulate, whereas through the outer jacket of which a preferably counter-current air flow circulates forced by a heat-carrying air blower fan (2.1), which is connected through an upper inlet of said fume heat recovery unit (2.2), the latter including a lower outlet of the air reheated by the combustion gases which, by means of a recirculation circuit, is caused to pass through an oxygen exchanger (2.3), for preheating the oxygen as an oxidiser feeding the oxycombustion burner (2.6) up to a temperature in the order of 800ºC, which reheated air is caused in turn to pass through a gas exchanger (2.4) which heats the natural gas, hydrogen, or fuel, or mixture thereof used up to a temperature in the order of 500ºC, including a circuit of recirculation valves (2.5), with means for complete or partial recirculation or outward expulsion of air heated by the fume heat recovery unit (2.2) once the oxidiser and the fuel feeding the oxycombustion burner (2.6) have been preheated.

Optionally, there has been intended to be able to install, in correspondence with the stack, before the inlet to the fume heat recovery unit (2.2), a dilution air injector (2.7) controlled by means of a servomotor or the like to protect the heat recovery unit from temperatures higher than 1250ºC.

Last but not least, in the front wall of the combustion chamber (1.4), and opposite the raw material inlet, there is arranged the aforementioned oxycombustion burner (2.6), having a new design and geometry for its burner and duct, both in terms of the new geometry and in terms of the new materials used, mainly in terms of the extreme oxidising nature of the oxygen with a purity close to 100% and temperatures around 800ºC, such that it is arranged so that the hottest point of the flame occurs as close as possible to the raw material inlet, as shown in Figure 1.

## Claims

1. An oxycombustion kiln for melting frits and enamels which, based on the conventional structuring of a kiln for melting ceramic frits, which has a receiving hopper (1.1) for the material to be melted, feeding the kiln through a feed auger (1.2), specifically through a loading hole (1.3), and including a combustion chamber (1.4) with an opening which communicates with a refractory brick outlet stack (1.5) as a gas evacuation channel, ending with a metal outlet stack (1.6), while a floor (1.7) is established in the lower portion, the body of the kiln having a burner and a lower outlet spout (1.8) for the exit of the molten material, is **characterised in that** there is established between the refractory brick outlet (1.5) and the metal outlet stack (1.6), a fume heat recovery unit (2.2), in which there is defined an outlet circuit for combustion fumes and a recirculation and heating circuit for air forced by a heat-carrying air blower fan (2.1), which is connected in series with an oxygen exchanger (2.3) and a gas exchanger (2.4) which determine respective means for heating the oxygen as oxidiser and fuel feeding the oxycombustion burner (2.6) of the kiln to temperatures in the order of 800ºC for oxygen and 500ºC for natural gas, hydrogen, or fuel, or mixture thereof used.

2. The oxycombustion kiln for melting frits and enamels according to claim 1, wherein the recirculation circuit for the air heated by the fume heat recovery unit (2.2) includes a circuit of recirculation valves (2.5), with means for complete or partial recirculation or outward expulsion of air heated by said fume heat recovery unit (2.2) once the oxidiser and the fuel feeding the oxycombustion burner (2.6) have been preheated.

3. The oxycombustion kiln for melting frits and enamels according to claim 1, wherein the oxycombustion burner (2.6) is arranged on the front wall of the combustion chamber (1.4), opposite the raw material inlet, including an outer heat-insulation, with the nozzle being manufactured in refractory steel and the duct of said burner being manufactured with refractory concrete.

4. The oxycombustion kiln for melting frits and enamels according to claim 1, wherein the stack includes, before the inlet of the fume heat recovery unit (2.2), a dilution air injector (2.7) provided with control means as an element for protecting the heat recovery unit against high temperatures.

5. The oxycombustion kiln for melting frits and enamels according to claim 1, wherein the fume heat recovery unit (2.2) is carried out in a double jacket type exchanger, through the inner jacket of which combustion gases circulate, whereas through the outer jacket of which the air for heating the fuel and the oxidiser circulates in counter-current.
